(19) **Europäisches Patentamt / European Patent Office / Office européen des brevets**

(11) **EP 2 220 171 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **08863077.7**

(22) Anmeldetag: **11.12.2008**

(51) Int Cl.:
*C09C 1/00* (2006.01)  *C09D 5/24* (2006.01)
*C09D 5/36* (2006.01)  *C09D 7/12* (2006.01)
*C08K 9/02* (2006.01)  *C08K 3/22* (2006.01)

(86) Internationale Anmeldenummer:
**PCT/EP2008/010529**

(87) Internationale Veröffentlichungsnummer:
**WO 2009/077123 (25.06.2009 Gazette 2009/26)**

(54) **FARBSTARKE UND/ODER OPTISCH VARIABLE PIGMENTE MIT ELEKTRISCH LEITFÄHIGEM KERN**

INTENSELY COLORED AND/OR OPTICALLY VARIABLE PIGMENTS COMPRISING AN ELECTRICALLY CONDUCTIVE CORE

PIGMENTS À POUVOIR COLORANT ET/OU OPTIQUEMENT VARIABLES, CONSTITUÉS D'UN NOYAU ÉLECTROCONDUCTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 DE 102007061693**

(43) Veröffentlichungstag der Anmeldung:
**25.08.2010 Patentblatt 2010/34**

(73) Patentinhaber: **Merck Patent GmbH
64293 Darmstadt (DE)**

(72) Erfinder:
• **KRIETSCH, Burkhard
64807 Dieburg (DE)**
• **KUNTZ, Matthias
64342 Seeheim-Jugenheim (DE)**
• **RUEGER, Reinhold
63322 Rödermark (DE)**

(56) Entgegenhaltungen:
**EP-A1- 1 375 601       WO-A-2004/099319
WO-A-2006/131472    US-A1- 2007 015 012**

**Beschreibung**

Die vorliegenden Erfindung betrifft farbstarke und/oder optisch variable Pigmente, die einen plättchenförmigen transparenten oder semitransparenten elektrisch leitfähigen Kern und mindestens eine den Kern umhüllende farbgebende dielektrische Schicht umfassen, ein Verfahren zu ihrer Herstellung sowie deren Verwendung.

Effektpigmente spielen in den letzten Jahren eine immer wichtiger werdende Rolle, wenn es um die industrielle Anwendung von Farbmitteln oder funktionellen Pigmenten geht. Dabei spielt in der Regel entweder die erwünschte Farbgebung oder eine gewünschte technische Funktion der verwendeten Pigmente die ausschlaggebende Rolle bei der Auswahl der Pigmente. In letzter Zeit sind auch häufiger Versuche unternommen worden, Funktionalität und Farbgebung von Pigmenten miteinander zu vereinbaren, wobei oft qualitative Abstriche entweder in den optischen oder in den funktionellen Eigenschaften der Pigmente in Kauf genommen werden müssen.

Traditionell werden zur Farbgebung in technischen Anwendungen wie Farben, insbesondere Druckfarben, Lacken, Kunststoffen, keramischen Materialien und dergleichen häufig Perlglanzpigmente verwendet, die neben gewünschten Farbeffekten insbesondere eine hohe Glanzwirkung, einen subtilen Schimmer und eine schwache winkelabhängig variierende Farbgebung erzeugen können. Da sie sich auf Grund ihrer hohen Transparenz besonders gut mit anderen organischen oder anorganischen Farbmitteln mischen lassen, sind viele verschiedene technische Anwendungen auf der Basis solcher Gemische gebräuchlich.

Neben den klassischen Perlglanzpigmenten aus plättchenförmigem $TiO_2$, $BiOCl$, basischem Bleicarbonat oder den bewährten Metalloxid/Glimmerpigmenten sind in den letzten Jahren viele spezielle Effektpigmente hinzugekommen, die auf Substraten wie $Al_2O_3$-, $SiO_2$- oder Glasflakes ein- oder mehrlagige Beschichtungen aufweisen und deren Farbstellung im wesentlichen durch Interferenzeffekte erzielt wird.

Besonders erwünscht sind für vielfältige Anwendungsmöglichkeiten solche Pigmente, die eine hohe Farbstärke (Chroma) und/oder blickwinkelabhängig wechselnde Farbeigenschaften (Farbflop, optisch variables Verhalten) aufweisen. Solche Eigenschaften sind mit den oben genannten Pigmenttypen dann erhältlich, wenn die Substrate und die darauf befindlichen Schichten strengen Qualitätsanforderungen, insbesondere hinsichtlich Glattheit und Gleichmäßigkeit der aufgebrachten Schichten, geringer Porosität der Beschichtungen und hoher Transparenz der Schichten bei gleichzeitig perfekter Abstimmung der einzelnen Schichtdicken aufeinander, genügen.

Bekannt sind ebenso funktionelle Pigmente, die elektrisch leitfähig sind und insbesondere in technischen Anwendungen zum Tragen kommen. Diese Pigmente bestehen entweder aus elektrisch leitfähigen Materialien oder enthalten diese in einer Beschichtung auf einem Trägermaterial. Dabei können die Trägermaterialien verschiedene Formen annehmen.

Bekannt sind beispielsweise elektrisch leitfähige Pigmente auf der Basis transparenter plättchenförmiger Substrate, wie mit $(SbSn)O_2$ beschichteter Glimmer oder Glimmer, der eine ein- oder mehrlagige dielektrische Beschichtung und darauf eine äußere $(SbSn)O_2$-Schicht aufweist. Für die Erzielung der elektrischen Leitfähigkeit der Pigmente ist es wichtig, dass sich die Schicht aus elektrisch leitfähigem Material an der Oberfläche der Pigmente befindet. Solche Pigmente können, in verschiedene Anwendungsmedien eingebracht, zur Ausbildung einer elektrisch leitfähigen Beschichtung, beispielsweise in Kunststoffartikeln, Fußbodenbelägen und dergleichen, beitragen und sind kommerziell erhältlich (z. B. von der Fa. Merck KGaA unter der Bezeichnung Minatec® 31CM oder Minatec® 30 CM). Sie sind z. B. in den Patenten DE 38 42 330, DE 42 37 990, EP 0 139 557, EP 0 359 569 und EP 0 743 654 beschrieben.

Für bestimmte Anwendungsgebiete, beispielsweise Sicherheitsprodukte wie Banknoten, Schecks, Kreditkarten, Pässe, Tickets und dergleichen sind jedoch in einigen Ausführungsformen auch Pigmente erforderlich, die in der Lage sind, auf das Einbringen in elektromagnetische Felder oder durch Anregung per hochfrequentem elektromagnetischen Feld, z. B. durch Mikrowellen, mit ähnlichen Signalen wie elektrisch leitfähige Pigmente zu reagieren, um bestimmte Sicherheitsüberprüfungen vornehmen zu können. Solche Pigmente müssen beispielsweise eine Ablenkung der Feldlinien eines elektrischen Wechselfeldes hervorrufen, dürfen aber an sich nicht elektrisch leitfähig sein, weil es sonst beim Anlegen des elektrischen Feldes und entsprechend hoher Pigmentkonzentration zu einem Kurzschluss im Sicherheitsprodukt kommen kann.

Andererseits sind, gerade in Sicherheitsprodukten, in den letzten Jahren häufig die oben bereits erwähnten optisch variablen Pigmente eingesetzt worden, um Sicherheitselemente zu generieren, die auch vom ungeübten Beobachter ohne besondere Hilfsmittel erkannt werden können. So werden beispielsweise unter anderem bestimmte Zahlen oder Muster aufgedruckt, die unter einem bestimmten Betrachtungswinkel eine erste Farbe und unter einem anderen Betrachtungswinkel eine zweite Farbe zeigen.

Sollen nun auf geringem Raum, z. B. in einem Aufdruck, mehrere verschiedene sichtbare und unsichtbare Sicherheitsmerkmale auf einem Sicherheitsprodukt untergebracht werden, wird die Pigmentkonzentration schnell so hoch, dass die erforderliche Viskosität der Druckfarbe nicht mehr erreicht werden kann oder dass sich die verschiedenen Pigmente gegenseitig überlagern und so in ihrer Wirksamkeit behindern. Häufig lassen sich wegen der gegenseitigen Beeinflussung der Komponenten weder die Farbe noch die Funktion der Sicherheitsmerkmale optimal einstellen. Es besteht daher ein Bedarf an Pigmenten, die gleichzeitig möglichst viele der gewünschten Eigenschaften aufweisen.

Aus der US 2007/0015012 A1 ist ein Verfahren zur Behandlung von Partikeln mit einem Plasmabrenner bekannt. Dabei kann es sich um plättchenförmige Partikel handeln, die auf dem Substrat eine leitfähige Schicht aufweisen. In EP 1 375 601 A1 sind Fünfschichtpigmente auf der Basis von mehrfach beschichteten plättchenförmigen Substraten beschrieben, die zwei Schichten aus $SnO_2$ aufweisen.

Es war daher die Aufgabe der vorliegenden Erfindung, Pigmente zur Verfügung zu stellen, welche über gut sichtbare und unterscheidbare attraktive optische Eigenschaften verfügen und gleichzeitig in der Lage sind, im Anwendungsmedium bei dessen Einbringen in ein elektromagnetisches Feld oder bei Anregung durch hochfrequente elektromagnetische Felder ein zur Detektion ausreichend starkes Signal zu erzeugen oder zu initiieren, ohne dass es bei höherer Einsatzkonzentration des Pigmentes zur Ausbildung eines Kurzschlusses im Anwendungsmedium kommt.

Eine weitere Aufgabe der Erfindung bestand darin, ein Verfahren zur Herstellung der genannten Pigmente zur Verfügung zu stellen.

Zusätzlich bestand eine Aufgabe der Erfindung darin, die Verwendung derartiger Pigmente aufzuzeigen.

Die Aufgabe der Erfindung wird durch farbstarke und/oder optisch variable Pigmente gemäß Anspruch 1 gelöst.

Außerdem wird die Aufgabe der Erfindung durch ein Verfahren zur Herstellung von farbstarken und/oder optisch variablen Pigmenten gelöst, welches die folgenden Schritte umfasst:

    a) optional Beschichten eines plättchenförmigen transparenten oder semitransparenten Substrates, welches ausgewählt ist aus der Gruppe bestehend aus synthetischem oder natürlichem Glimmer, anderen Schichtsilikaten, Glasplättchen, plättchenförmigem $SiO_2$ und plättchenförmigem $Al_2O_3$, mit einer oder mehreren dielektrischen Schichten,

    b) beidseitiges oder umhüllendes Beschichten des Substrates mit einer elektrisch leitfähigen Schicht, die mindestens eine Schichtdicke von 15 nm aufweist und ein oder mehrere dotierte Metalloxide umfasst, wobei ein elektrisch leitfähiger Kern erhalten wird,

    c) umhüllendes Beschichten des elektrisch leitfähigen Kerns mit mindestens einer farbgebenden dielektrischen Schicht.

Des weiteren wird die Aufgabe der Erfindung durch die Verwendung der genannten Pigmente in Farben, Lacken, Druckfarben, Kunststoffen, Sicherheitsanwendungen, Folien, Formulierungen, keramischen Materialien, Gläsern, Papier, zur Lasermarkierung, zur Abschirmung oder Dämpfung hochfrequenter elektromagnetischer Strahlung, zur Wärmereflexion, in Trockenpräparaten und Pigmentpräparationen gelöst.

Die erfindungsgemäßen Pigmente weisen einen plättchenförmigen transparenten oder semitransparenten elektrisch leitfähigen Kern und mindestens eine den Kern umhüllende farbgebende dielektrische Schicht gemäß Anspruch 1 auf.

Als plättcherrförmig im Sinne der vorliegenden Erfindung wird ein flaches Gebilde angesehen, welches mit seiner Ober- und Unterseite zwei annähernd parallel zueinander stehende Oberflächen aufweist, deren Ausdehnung in Länge und Breite die größte Ausdehnung des Pigmentes darstellt. Der Abstand zwischen den genannten Oberflächen, der die Dicke des Plättchens darstellt, weist dagegen eine geringere Ausdehnung auf.

Die Ausdehnung in Länge und Breite der erfindungsgemäßen Pigmente beträgt dabei zwischen 1 und 250 $\mu$m, vorzugsweise zwischen 2 und 100 $\mu$m, und insbesondere zwischen 5 und 60 $\mu$m. Sie stellt auch den Wert dar, der gewöhnlich als Teilchengröße der Pigmente bezeichnet wird. Diese ist als solche nicht kritisch, allerdings ist eine enge Teilchengrößenverteilung der Pigmente bevorzugt. Die Dicke der Pigmente beträgt von 0,01 bis 5 $\mu$m, vorzugsweise von 0,1 bis 2 $\mu$m.

Als transparent im Sinne der vorliegenden Erfindung soll der elektrisch leitfähige Kern dann gelten, wenn er sichtbares Licht im wesentlichen, d.h. zu mindestens 90% transmittiert. Als semitransparent wird der elektrisch leitfähige Kern dann betrachtet, wenn er mindestens 10%, aber weniger als 90% des sichtbaren Lichtes transmittiert.

Als dielektrisch wird eine Schicht dann bezeichnet, wenn sie den elektrischen Strom nicht leitet.

Als farbgebend im Sinne der Erfindung wird eine dielektrische Schicht dann bezeichnet, wenn sie durch Interferenz und/oder Eigenfärbung die optischen Eigenschaften des Pigmentes maßgeblich mit bestimmt, also eine eigene optische Aktivität aufweist. Eine solche Schicht kann farbig (zum Beispiel aus einer farbigen Metallverbindung) oder farblos sein. Im letzteren Falle weist die farblose Schicht eine Schichtdicke auf, die durch Ausbildung von Interferenzeffekten einen eigenständigen Beitrag zur Farbgebung des Pigmentes zu bringen in der Lage ist.

Der elektrisch leitfähige Kern weist ein transparentes oder semi-transpa-rentes plättchenförmiges Substrat und eine das Substrat umhüllende oder beiderseits des Substrates befindliche Beschichtung auf, wobei die Beschichtung ein- oder mehrschichtig ausgebildet ist und mindestens die äußere Schicht der Beschichtung eine elektrisch leitfähige Schicht darstellt.

Für das Substrat getten ebenfalls die oben verwendeten Begriffserläute-rungen für die Begriffe plättchenförmig, transparent und semitransparent Das Substrat selbst kann entweder elektrisch leitfähig oder dielektrisch sein und besteht vorzugsweise aus einem dielektrischen Material. Das Substrat besteht jedoch nicht aus einem metallischen Material. Für den Einsatz als Substrat sind plättchenförmige Materialien geeignet, die ausgewählt sind aus der Gruppe bestehend aus synthetischem oder natürlichem Glimmer, anderen Schichtsilikaten wie Talk oder Kaolin, Glasplättchen, plättchenförmigem $SiO_2$ and plättchenförmigem $Al_2O_3$.

Glimmer ist davon ganz besonders bevorzugt.

Die auf dem Substrat befindliche Beschichtung ist ein- oder mehrschichtig ausgebildet. Ist sie einschichtig aufgebaut, handelt es sich um eine Schicht aus einem elektrisch leitfähigen Material, während bei einem mehrschichtigen Aufbau der Beschichtung mindestens die äußere dieser Schichten eine Schicht aus einem elektrisch leitfähigen Material darstellt.

Bei einem mehrschichtigen Aufbau kann die sich unmittelbar auf dem Substrat befindende erste Schicht und gegebenenfalls eine oder mehrere Folgeschichten aus einem dielektrischen Material bestehen. Diese Schichten können sowohl aus einem hochbrechenden als auch aus einem niedrigbrechenden Material bestehen und dienen zur Abschirmung der leitfähigen Schicht gegen das Substrat, um einen Ionenaustausch zu verhindern, und/oder zur Beeinflussung der Farbstellung der Pigmentes. Geeignete Materialien werden weiter unten angeführt.

In einer bevorzugten Ausführungsform der vorliegenden Erfindung besteht die sich unmittelbar auf dem Substrat befindende erste Schicht aus $SiO_2$ oder Siliziumoxidhydrat und eine darauf folgende zweite Schicht aus einem elektrisch leitfähigen Material. Dabei kann die erste Schicht optional auch weitere Metalloxide, wie beispielsweise geringe Mengen Aluminiumoxid, enthalten.

Es ist jedoch auch eine weitere Ausführungsform der vorliegenden Erfindung bevorzugt, bei der sich die elektrisch leitfähige Schicht direkt auf dem Substrat befindet und so eine elektrisch leitfähige Beschichtung bildet.

Die elektrisch leitfähige Schicht wie auch die gegebenenfalls unmittelbar auf dem Substrat unterhalb der elektrisch leitfähigen Schicht angeordneten Schichten müssen das Substrat nicht zwangsläufig umhüllen. Für die Herstellung der erfindungsgemäßen Pigmente ist es ausreichend, wenn diese Schicht(en) beidseitig des Substrates ausgebildet sind, d.h. sich auf den größten Flächen des Substrates befinden. Es sind jedoch die Ausführungsformen bevorzugt, bei denen zumindest die elektrisch leitfähige Schicht, besonders bevorzugt aber alle sich im elektrisch leitfähigen Kern befindlichen Schichten, das Substrat weitestgehend vollständig umhüllen.

Als Material für die elektrisch leitfähige Schicht sind dotierte Metalloxide geeignet, wobei die elektrisch leitfähige Schicht ein oder mehrere von diesen umfasst Bei den Metalloxiden handelt es sich vorzugsweise um Zinnoxid, Zinkoxid, Indiumoxid und/oder Titanoxid, vorzugsweise um Zinnoxid, Indiumoxid und/oder Zinkoxid. Die genannten Metalloxide liegen in der leitfähigem Schicht dotiert vor, wobei die Dotierung mit Gallium, Aluminium, Indium, Thallium, Germanium. Zinn, Phosphor, Arsen, Antimon, Selen, Tellur, Molybdän, Wolfram und/oder Fluor erfolgen kann. Dabei können in der leitfähigen Schicht einzelne der genannten Dotierstoffe, aber auch Kombinationen hieraus vorliegen. Vorzugsweise werden Aluminium, Indium, Tellur, Fluor, Wolfram, Zinn und/oder Antimon zur Dotierung der Metalloxide eingesetzt. Der Anteil der Dotierstoffe in der leitfähigen Schicht kann 0,1 bis 30 Gew.-% betragen, vorzugsweise liegt er im Bereich von 2 bis 15 Gew.-%. In einer besonders bevorzugten Ausführungsform werden als leitfähige Schicht mit Antimon dotiertes Zinnoxid, mit Antimon und Tellur dotiertes Zinnoxid, mit Wolfram dotiertes Zinnoxid, mit Zinn dotiertes Indiumoxid, mit Aluminium dotiertes Zinkoxid oder mit Fluor dotiertes Zinnoxid eingesetzt, wobei mit Antimon dotiertes Zinnoxid besonders bevorzugt ist. Das Verhältnis Zinn zu Antimon in dieser bevorzugten Kombination kann 4:1 bis 100:1 betragen, vorzugsweise liegt das Verhältnis bei 8:1 bis 50:1. Geringere Antimongehalte beeinflussen die Leitfähigkeit in negativer Weise, wohingegen höhere Antimongehalte die Absorption der Pigmente im sichtbaren Wellenlängenbereich erhöhen und die Transparenz der elektrisch leitfähige Kerne der erfindungsgemäßen Pigmente herabsetzen.

Der Anteil der elektrisch leitfähigen Schicht, bezogen auf das plättchenförmige Substrat, kann 20 bis 120 Gew.-% betragen und liegt vorzugsweise bei 40 bis 75 Gew.-%.

Das transparente oder semitransparente Substrat und die sich auf dem Substrat befindende Beschichtung, die mindestens an ihrer Oberfläche eine äußerste Schicht aufweist, die elektrisch leitfähig ist, bilden den elektrisch leitfähigen Kern des erfindungsgemäßen Pigmentes.

Dieser Kern wird erfindungsgemäß von mindestens einer farbgebenden dielektrischen Schicht umhüllt.

Diese den Kern umhüllende Schicht kann eine Schicht aus einem Material mit einer Brechzahl $n \geq 1,8$ oder eine Schicht aus einem Material mit einer Brechzahl $n < 1,8$ sein. Im ersten Falle würde diese Schicht als hochbrechend bezeichnet, im letzteren Falle als niedrigbrechend.

Auf dieser ersten Schicht können sich noch weitere dielektrische Schichten befinden, die ebenfalls für die Farbgebung des Pigmentes bedeutsam sind.

So ist eine Ausführungsform bevorzugt, bei der sich auf der ersten Schicht aus einem Material mit einer Brechzahl $n \geq 1,8$ weitere Schichten befinden, die die jeweils darunter liegende Schicht umhüllen und alternierend aus einem Material mit einer Brechzahl $n < 1.8$ und einem Material mit einer Brechzahl $n \geq 1,8$ bestehen. Mindestens eine, bevorzugt jedoch mehrere und ganz besonders bevorzugt jede dieser Schichten tragen dabei durch Interferenz und/oder Eigenfarbe zur Farbgebung des Pigmentes bei. Bevorzugt ist eine Ausführungsform mit insgesamt drei Schichten.

Ebenso ist eine Ausführungsform bevorzugt, bei der sich auf der ersten Schicht aus einem Material mit einer Brechzahl $n < 1.8$ weitere Schichten befinden, die die jeweils darunter liegende Schicht umhüllen und alternierend aus einem Material mit einer Brechzahl n ≥ 1,8 und einem Material mit einer Brechzahl n < 1.8 bestehen. Auch in dieser Ausführungsform trägt mindestens eine, bevorzugt jedoch mehrere und ganz besonders bevorzugt jede dieser Schichten durch Interferenz und/oder Eigenfarbe zur Farbgebung des Pigmentes bei. Bevorzugt sind hier eine Ausführungsform mit insgesamt zwei Schichten und eine weitere Ausführungsform mit insgesamt vier Schichten auf dem elektrisch leitfähigen Kern. Das bedeutet, dass eine Schicht aus einem Material mit einer Brechzahl n ≥ 1,8 jeweils die äußerste Schicht des Pigmentes bildet.

Bei dieser letztgenannten Ausführungsform ist es nicht unbedingt erforderlich, dass bereits die erste, sich unmittelbar auf dem elektrisch leitfähigen Kern befindliche Schicht mit niedriger Brechzahl einen wesentlichen Beitrag zur Farbgebung des Pigmentes leistet, d.h. über eine eigene optische Aktivität verfügt. Diese erste Schicht kann hier auch als Isolationsschicht dienen, um den elektrisch leitfähigen Kern und die über der ersten Schicht liegende(n) weitere(n) Schicht(en) so zu separieren, dass beim Glühen des Pigmentes kein Ionenaustausch zwischen diesen Schichten erfolgen kann. In einem solchen Falle würde, beispielsweise bei einer ersten Schicht aus SiO2, eine Schichtdicke von etwa 10 nm ausreichen, um eine Isolationsfunktion dieser Schicht erzielen zu können. Ist die Schichtdicke dieser Schicht jedoch größer als 10 nm, insbesondere größer als 20 nm und ganz besonders größer als 30 nm, so leistet auch die erste Schicht mit niedriger Brechzahl einen eigenständigen Beitrag zur Farbgebung des Pigmentes, der sich aus der Interferenzfähigkeit dieser Schicht ergibt. Ist die erste niedrigbrechende Schicht farbig, ist ihr Anteil an der Farbgebung des Pigmentes verständlicherweise auch bei sehr geringen Schichtdicken größer als der Anteil einer gleich dicken farblosen Schicht.

Ist die Schichtdicke der ersten niedrigbrechenden Schicht so gering, dass sie keinen eigenständigen Beitrag zur Farbgebung des Pigmentes leistet, ist in jedem Falle noch mindestens eine weitere hochbrechende Schicht auf der ersten Schicht angeordnet, wobei dann diese hochbrechende Schicht und gegebenenfalls die weiteren auf der hochbrechenden Schicht angeordneten Schichten die Farbgebung des Pigmentes bestimmen.

Ob die erfindungsgemäßen Pigmente farbstark oder optisch variabel sind, ist im wesentlichen von der Anzahl der auf dem elektrisch leitfähigen Kern befindlichen Schichten und deren Schichtdicken abhängig. So steigt mit der Anzahl der Schichten deren Vermögen zur Ausbildung von optischer Variabilität, d.h. eines blickwinkelabhängig wechselnden Farbtons. Dazu ist es insbesondere von Vorteil, wenn eine niedrigbrechende Schicht (beispielsweise aus SiO2), die sich zwischen zwei hochbrechenden Schichten befindet, eine nennenswerte Schichtdicke von mindestens 30 nm, besser mindestens 50 nm und insbesondere mindestens 80 nm aufweist. Selbstverständlich ist es, wie es dem Fachmann geläufig ist, erforderlich, dass die Schichtdicken aller auf dem elektrisch leitfähigen Kern befindlichen dielektrischen Schichten so aufeinander abgestimmt sind, dass bestimmte Farben durch gezieltes Zusammenspiel der Interferenzeffekte und/oder der Eigenfärbung der Schichten entweder verstärkt oder unterdrückt werden. Auf diese Weise lassen sich auch bei einem Mehrschichtaufbau farbstarke Pigmente ohne optisch variables Verhalten erzeugen.

Bei den Schichten aus einem Material mit einer Brechzahl n ≥ 1,8 handelt es sich um Schichten, die vorzugsweise aus TiO2, Titanoxidhydrat, Titansuboxiden, Fe2O3, FeOOH, SnO2, ZnO, ZrO2, Ce2O3, CoO, Co3O4, V2O5, Cr2O3 und/oder Mischphasen davon bestehen. Diese Materialien sind entweder farblos oder besitzen eine Eigenfarbe auf Grund von Eigenabsorption. Besonders bevorzugt sind TiO2, Titanoxidhydrat, Fe2O3, FeOOH und SnO2. Insbesondere bevorzugt sind TiO2 und Titanoxidhydrat. Da diese durch Vorabbelegung mit Zinnoxid über eine besonders hohe Brechzahl verfügen, sind auch Mischphasen aus Zinnoxid mit Ti02 und/oder Titanoxidhydrat besonders bevorzugt, die sich in diesen Fällen aus den geringen Mengen an Zinnoxid und der nachfolgenden Schicht aus TiO2 und/oder Titanoxidhydrat bilden.

Die Schichten aus einem Material mit einer Brechzahl n < 1,8 bestehen vorzugsweise aus SiO2, Siliziumoxidhydrat, Al2O3, Aluminiumoxidhydrat, aus Mischphasen davon oder aus MgF2. Durch Einlagerung von Farbmitteln in diese Materialien können diese Schichten auch eine Eigenfärbung aufweisen. Besonders bevorzugt sind SiO2 und/oder Siliziumoxidhydrat.

Die erfindungsgemäßen Pigmente besitzen eine intrinsische elektrische Leitfähigkeit, ohne im Anwendungsmedium zur Ausbildung von elektrisch leitfähigen Schichten zu führen, was auf das komplette Umhüllen der elektrisch leitfähigen Schicht durch ein ausreichend dickes Dielektrikum zurückzuführen ist. Damit sinkt die Perkolationsschwelle im Anwendungsmedium, d.h. die Wahrscheinlichkeit, dass sich eine Pigmentverteilung einstellt, bei der sich ein Cluster oder ein Kanal von aneinander grenzenden elektrisch leitfähigen Pigmenten, der sich durch das gesamte Anwendungsmedium erstreckt, bildet und somit eine zusammenhängende elektrisch leitfähige Fläche entsteht, auch bei höheren Konzentrationen des erfindungsgemäßen Pigmentes im Anwendungsmedium gegen Null.

Werden also die erfindungsgemäßen Pigmente in ein Anwendungsmedium eingebracht, wird es selbst bei höherer Pigmentkonzentration und bei Anregung der Pigmente durch ein elektromagnetisches Feld nicht zu einem Kurzschluss im Anwendungsmedium kommen. Andererseits ist die elektrische Leitfähigkeit der leitfähigen Schicht in den erfindungsgemäßen Pigmenten schon bei 15 nm Schichtdicke ausreichend, um in elektromagnetischen Feldern oder in Mikrowellen ein ähnliches Verhalten wie voneinander isoliert vorliegende, also nicht im direkten Kontakt zueinander befindliche, elektrisch leitfähige Pigmente zu zeigen.

Andererseits sind die erfindungsgemäßen Pigmente farbstark und/oder zeigen ein optisch variables Verhalten, was ihren Einsatz zur Pigmentierung von Anwendungsmedien der verschiedensten Art ermöglicht. Um neben der intrinsischen elektrischen Leitfähigkeit ein solches optisch interessantes Erscheinungsbild der Pigmente erzielen zu können, ist es insbesondere von Wichtigkeit, dass die elektrisch leitfähige Schicht besonderen Qualitätsansprüchen hinsichtlich ihrer Homogenität, Korngröße, Ebenheit der Oberfläche etc. genügt. Um dies zu erreichen, ist ein besonders fein abgestimmtes Herstellungsverfahren vonnöten.

Gegenstand der vorliegenden Erfindung ist daher auch ein Verfahren zur Herstellung von farbstarken und/oder optisch variablen Pigmenten, umfassend die folgenden Schritte:

a) optional Beschichten eines plättchenförmigen transparenten oder semitransparenten Substrates, weiches ausgewählt ist aus der Gruppe bestehend aus synthetischem oder natürlichem Glimmer, anderen Schichtsilikaten, Glasplättchen, plättchenförmigem $SiO_2$ und plättchenförmigem $Al_2O_3$, mit einer oder mehreren dielektrischen Schichten,

b) beidseitiges oder umhüllendes Beschichten des Substrates mit einer elektrisch leitfähigen Schicht, die mindestens eine Schichtdicke von 15 nm aufweist und ein oder mehrere dotierte Metalloxide umfasst, wobei ein elektrisch leitfähiger Kern erhalten wird,

c) umhüllendes Beschichten des elektrisch leitfähigen Kerns mit mindestens einer farbgebenden dielektrischen Schicht.

Obwohl es möglich ist, das Beschichten des Substrates in den Schritten a) und/oder b) so zu gestalten, dass nur die großen Flächen des Substrates jeweils durch die Beschichtung belegt werden, beispielsweise mittels eines CVD- oder PVD-Verfahrens oder wenn das Substrat mit der Beschichtung in einem Bandverfahren hergestellt wird, sind doch Verfahren bevorzugt, bei denen die Beschichtung des plättchenförmigen Substrates in den Schritten a), b), und/oder c) im Sol-Gel-Verfahren, oder nasschemisch aus anorganischen Ausgangsstoffen erfolgt.

Bedingt durch die Einfachheit des Verfahrens und die gute Verfügbarkeit an Ausgangsstoffen ist es besonders bevorzugt, wenn die Beschichtung des Substrates in den Schritten a), b) und/oder c) nasschemisch aus anorganischen Ausgangsstoffen erfolgt.

Insbesondere für den Verfahrensschritt b) sind hierzu jedoch einige Besonderheiten zu beachten.

Wie bereits vorab beschrieben, muss insbesondere die elektrisch leitfähige Schicht einige Voraussetzungen erfüllen, um eine genügend hohe intrinsische Leitfähigkeit der erfindungsgemäßen Pigmente zu erzeugen, gleichzeitig aber auch eine gute Grundlage für den darauf folgenden Schichtaufbau aus dielektrischen Schichten zu bilden, die zur Interferenz fähig sein müssen.

Ein häufig zur Herstellung elektrisch leitfähiger Pigmente verwendetes Material ist mit Antimon dotiertes Zinnoxid. Nun hat es sich aber herausgestellt, dass die üblichen nasschemischen Verfahren zur Erzeugung solcher Schichten zwar die gewünschte elektrische Leitfähigkeit der Schicht erzielen können, die Oberflächeneigenschaften solcher Schichten jedoch weit hinter den Anforderungen, die hinsichtlich Homogenität und Glätte der Schicht an zur Interferenz fähige Schichten gestellt werden, zurückbleiben. Insbesondere zeigen solche Schichten eine grobe Körnigkeit, eine inhomogenen Dickenverteilung auf dem Substrat und oberflächlich anhaftende Partikel aus Nebenfällungen. Dadurch weisen solche Schichten eine stärkere Trübung und, nach dem Glühen, eine graue Eigenfärbung auf, die den optischen Gesamteindruck der Pigmente beeinträchtigen. Dünne Schichten, d.h. Schichten von weniger als 20 nm durchschnittlicher Dicke, können dann bei starker Körnigkeit so inhomogen sein, dass keine vollständige Bedeckung der Substratoberfläche mehr vorhanden ist.

In intensiven Untersuchungen wurde nun überraschenderweise herausgefunden, dass sich die koloristischen Eigenschaften der Pigmente wesentlich verbessern lassen, wenn die Körnigkeit der üblicherweise nasschemisch aufgefällten elektrisch leitfähigen Schicht verringert und die Bildung von Nebenfällung unterdrückt wird.

Daher ist in der vorliegenden Erfindung ein Verfahren bevorzugt, bei dem die elektrisch leitfähige Schicht nasschemisch aus anorganischen Ausgangsstoffen durch Ausfällen eines Niederschlages auf dem Substrat erfolgt, wobei das Ausbilden einer Nebenfällung verhindert wird.

Zwar lassen sich die Auswirkungen einer Nebenfällung durch Abtrennen des Pigments nach der Belegung mit der elektrisch leitfähigen Schicht, Waschen und gegebenenfalls Trocknen des Pigmentes und nachfolgendes aufwändiges Redispergieren und Nachbelegen mit weiteren Schichten in gewissem Grade kompensieren, aber ein solches Verfahren ist nicht wirtschaftlich und erfordert einen zu hohen apparativen Aufwand.

Überraschenderweise ist es nun gelungen, in einem Verfahrensschritt das gegebenenfalls vorbelegte Substrat nasschemisch so mit einer dünnen elektrisch leitfähigen Schicht aus mit Antimon dotiertem Zinnoxid belegen zu können, dass es nahezu zu keiner Nebenfällung kommt und die Korngrößen der Primärpartikel ausreichend groß sind, um eine genügend hohe Leitfähigkeit der Schicht zu gewährleisten.

Zu diesem Zwecke muss der pH-Wert der Pigmentsuspension bei der Belegung mit der elektrisch leitfähigen Schicht in geeigneter Weise eingestellt werden. Als besonders bevorzugt haben sich pH-Werte von 1,4 bis 2,5 erwiesen. Ganz besonders bevorzugt sind pH-Werte im Bereich von 1,6 bis 2,1.

Des weiteren spielt die Konzentration der Ausgangsstoffe eine besondere Rolle. Es hat sich als besonders vorteilhaft erwiesen, wenn die Konzentration des zu belegenden Substrates und die Konzentration der zur Belegung mit der elektrisch leitfähigen Schicht eingesetzten Materialien im Bereich von 2 bis 20 Gew.-%, bezogen auf das Lösemittel, eingestellt werden. Besonders bevorzugt ist dabei ein Bereich von 5 bis 15 Gew.-%, bei einer spezifischen Oberfläche des Substrates von ca. 3 bis 5 m$^2$ pro Gramm.

Hierdurch wird gewährleistet, dass sich der gebildete Niederschlag ohne Nebenfällung nahezu vollständig auf der Substratoberfläche der Pigmente abscheidet und eine primäre Korngröße der Primärpartikel erreicht wird, die später zu einer ausreichend hohen intrinsischen elektrischen Leitfähigkeit des Pigmentes führt.

Als vorteilhaft hat es sich auch eine hohe Rührgeschwindigkeit erwiesen. Auch dadurch wird die vollständige Abscheidung der gebildeten Primärpartikel auf den Substraten unterstützt.

Die Feinjustierung dieser Parameter ist dem Fachmann im individuellen Fall ohne weiteres möglich, z. B. durch ein statistisches Versuchsdesign nach Box-Behnken, beschrieben in Statistics for Experimenters, Whiley-Interscience, John Whiley and Sons, New York, 1978.

Im Schritt c) wird der elektrisch leitfähige Kern mit mindestens einer farbgebenden dielektrischen Schicht umhüllt. Um ein sicheres Umhüllen des elektrisch leitfähigen Kerns zu gewährleisten, bietet es sich an, den Verfahrensschritt c) entweder im Sol-Gel-Verfahren oder nasschemisch aus anorganischen Ausgangsstoffen auszuführen. Insbesondere wenn der Schritt b) im genannten nasschemischen Verfahren erfolgt ist es besonders vorteilhaft, auch im Verfahrenschritt c) das Beschichten mit der farbgebenden dielektrischen Schicht nasschemisch aus anorganischen Ausgangsstoffen auszuführen.

Zu diesem Zwecke geeignet sind alle für die Beschichtung von Interferenzpigmenten geeigneten nasschemischen Verfahren, die dem Fachmann geläufig sind. Diese sind beispielsweise in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben worden.

Bevorzugt ist auch ein Verfahren, bei dem der elektrisch leitfähige Kern im Schritt c) mit einem Schichtsystem aus mehreren übereinander liegenden dielektrischen Schichten versehen wird, die jeweils die darunter liegende Schicht umhüllen und alternierend aus einem Material mit einer Brechzahl n ≥ 1,8 und einem Material mit einer Brechzahl n < 1,8 bestehen, wobei die den leitfähigen Kern umhüllende erste Schicht entweder aus einem Material mit einer Brechzahl n ≥ 1,8 oder aus einem Material mit einer Brechzahl n < 1,8 bestehen kann und die äußerste Schicht des Pigmentes aus einem Material mit einer Brechzahl n ≥ 1,8 besteht.

Dabei ist es bevorzugt, wenn die (erste oder einzige) den elektrisch leitfähigen Kern umhüllende Schicht aus TiO$_2$ und/oder Titanoxidhydrat besteht, wobei TiO$_2$ sowohl in der Anatas- als auch in der Rutilmodifikation vorliegen kann. Letztere ist besonders bevorzugt.

Es ist jedoch auch eine andere Ausführungsform der vorliegenden Erfindung bevorzugt, bei der die erste den elektrisch leitfähigen Kern umhüllende Schicht aus SiO$_2$ und/oder Siliziumoxidhydrat besteht.

Wie bereits vorab erläutert ist es von Vorteil, wenn als äußerste (optisch aktive, d.h. farbbestimmende) Schicht des auf den elektrisch leitfähigen Kern aufzubringenden Schichtsystems eine hochbrechende Schicht (n ≥ 1,8) aufgebracht wird.

Wie ebenfalls bereits erwähnt ist ein solches Verfahren bevorzugt, bei dem eine elektrisch leitfähige Schicht aus einem mit Antimon dotierten Zinnoxid aufgebracht wird.

Gegenstand der vorliegenden Erfindung ist auch die Verwendung der vorab beschriebenen erfindungsgemäßen Pigmente in Farben, Lacken, Druckfarben, Kunststoffen, in Sicherheitsanwendungen, Folien, Formulierungen, keramischen Materialien, Gläsern, Papier, zur Lasermarkierung, zur Abschirmung oder Dämpfung hochfrequenter elektromagnetischer Strahlung, zur Wärmereflexion, in Trockenpräparaten oder in Pigmentpräparationen.

Bedingt durch ihre hohe Farbstärke und/oder durch ihr optisch variables Farbverhalten sind die erfindungsgemäßen Pigmente gut geeignet, lediglich auf Grund ihrer Farbeigenschaften zur Pigmentierung von Anwendungsmedien der vorab genannten Art eingesetzt zu werden. Dabei werden sie in der gleichen Weise wie übliche Interferenzpigmente eingesetzt. Wird als Material für die elektrisch leitfähige Schicht das erfindungsgemäß bevorzugte mit Antimon dotierte Zinnoxid eingesetzt, weisen die Pigmente darüber hinaus noch ein gewisses Deckvermögen auf, was sie von den üblichen nahezu völlig transparenten Interferenzpigmenten unterscheidet.

Beim Einsatz der Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft in Kunststoffen und Folien eingesetzt werden. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente. Besonderheiten der Einbringung in Kunststoffe sind daher beispielsweise in R. Glausch, M. Kieser, R. Maisch, G. Pfaff, J. Weitzel, Perlglanzpigmente, Curt Vincentz Verlag, 1996, 83 ff., beschrieben.

Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel (siehe unten), Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

In allen Anwendungsmedien, die zumindest gelegentlich dem Einfluss von elektromagnetischen Feldern oder Mikrowellen und dergleichen unterliegen, sind die erfindungsgemäßen Pigmente jedoch auch in der Lage, ein ähnliches Verhalten wie voneinander isoliert vorliegende, also nicht im direkten Kontakt zueinander befindliche, elektrisch leitfähige Pigmente zu zeigen.

Hierzu gehören z. B. die Dämpfung oder auch Reflexion von hochfrequenten elektromagnetischen Feldern sowie die gezielte Veränderung der elektrischen Flussdichte in einer dielektrischen Beschichtung im elektrischen Feld.

Letzteres ist besonders für viele Sicherheitsanwendungen, insbesondere in Sicherheitsprodukten, von Vorteil, die zur Prüfung von ansonsten unsichtbaren Sicherheitsmerkmalen oft dem Einfluss elektromagnetischer Felder unterliegen. Hier können die erfindungsgemäßen Pigmente beispielsweise zur Ablenkung von Feldlinien eines elektrischen Wechselfeldes dienen, womit eine lokale Verstärkung des elektromagnetischen Feldes erhalten wird (ein so genannter "Hot Spot"). Mit Hilfe dieser Hot Spots können beispielsweise elektrolumineszierende Stoffe zum Leuchten gebracht werden.

Dabei ist es, wie vorab bereits beschrieben wurde, besonders wichtig, dass die Pigmente zwar über eine intrinsische elektrische Leitfähigkeit verfügen, das Pigmentpulver als solches jedoch nicht elektrisch leitfähig ist.

Es versteht sich von selbst, dass die erfindungsgemäßen Pigmente in den verschiedensten Anwendungsmedien je nach Bedarf mit weiteren organischen und/oder anorganischen Farbmitteln und/oder elektrisch leitfähigen Materialien im Gemisch eingesetzt werden können. Die Mischungsverhältnisse sind hierbei in keiner Weise limitiert, so lange die Pigmentkonzentration im Medium hoch genug ist, um die gewünschten optischen und/oder funktionellen Eigenschaften zu erzielen, aber niedrig genug, um die erforderliche Viskosität nicht negativ zu beeinflussen. Dabei können sie in jedem Verhältnis mit handelsüblichen Zusatzstoffen, Füllstoffen und/oder Bindemittelsystemen gemischt werden.

Es versteht sich weiterhin von selbst, dass die erfindungsgemäßen Pigmente mit einer dem Fachmann geläufigen so genannten Nachbeschichtung versehen werden können, um sie für die Anwendung im jeweiligen Anwendungsmedium kompatibler auszurüsten. Dabei kann es sich sowohl um organische als auch anorganische Nachbeschichtungen handeln. Gegebenenfalls werden auch beide Typen der Nachbeschichtung gemeinsam eingesetzt. Eine solche Nachbeschichtung beeinflusst die optischen Eigenschaften der erfindungsgemäßen Pigmente nicht und schränkt auch die intrinsische elektrische Eigenschaft der Pigmente nicht ein.

Die erfindungsgemäßen Pigmente weisen eine hohe Farbstärke (Chroma) und/oder ein optisch variables Farbverhalten auf und sind daher für viele Anwendungsmedien geeignet, die solche Farbeigenschaften erfordern. Gleichzeitig sind sie jedoch intrinsisch leitfähig, so dass sie in Anwendungsmedien, die dem Einfluss elektromagnetischer Felder unterliegen, zur Erzeugung oder Initiierung von detektierbaren Signalen in der Lage sind. Beide Eigenschaften erweisen sich als besonders vorteilhaft beim Einsatz der erfindungsgemäßen Pigmente in Sicherheitsanwendungen, wo sie zur Erzeugung sowohl sichtbarer als auch unsichtbarer Sicherheitsmerkmale dienen können, von denen letztere beim Einbringen der Sicherheitsprodukte in ein elektromagnetisches Feld detektiert werden können. Sie lassen sich daher in besonders vorteilhafter Weise in Sicherheitsanwendungen zur Erzeugung multipler Sicherheitsmerkmale einsetzen.

Die vorliegende Erfindung soll nachfolgend anhand von Beispielen erläutert werden, die die Erfindung beschreiben, aber nicht beschränken sollen.

**Beispiel 1 (Vergleichsbeispiel):**

Herstellung eines leitfähigen Pigmentes ohne dielektrische Beschichtung

100 g gemahlener und klassierter Glimmer mit einer durchschnittlichen Teilchengröße von 25 $\mu$m ($d_{50}$, gemessen mit Laserbeugung) werden in 1900 ml VE-Wasser suspendiert und die Suspension mit Salzsäure auf einen pH-Wert von 1,8 eingestellt. Bei 75°C wird unter Rühren eine Mischung aus 132,9 g einer wässrigen $SnCl_4$-Lösung (50 Gew.-%), 42 ml HCl (37 Gew.-%) und 28,3 g einer wässrigen $SbCl_3$-Lösung (35 Gew.-%) kontinuierlich zudosiert. Durch gleichzeitige geregelte Zudosierung von Natronlauge wird der pH-Wert konstant gehalten. Nach Zugabe der Gesamtmenge der Lösung wird noch 30 min bei 75°C nachgerührt, anschließend unter Rühren auf Raumtemperatur abgekühlt und die Reaktionsmischung auf pH 3 eingestellt. Das erhaltenen Pigment wird über eine Nutsche abfiltriert, mit Wasser gewaschen, bei 140°C getrocknet und 30 min bei 750°C geglüht. Man erhält 145 g eines hellgrauen Pigmentpulvers. Das Verhältnis Sn:Sb in der Beschichtung beträgt 85:15, die Schichtdicke der leitfähigen Beschichtung beträgt ca. 25 nm.

**Beispiel 2 (Erfindung):**

Herstellung eines goldenen Interferenzpigmentes mit leitfähigem Kern

100 g des Pigmentes aus Beispiel 1 werden in 1500 ml Wasser suspendiert. Unter starkem Rühren werden bei 75°C und pH 7,5 362 g einer Natronwasserglaslösung langsam zudosiert. Der $SiO_2$-Gehalt der Lösung beträgt ca. 13 Gew.-%. Es wird noch 1 Stunde nachgerührt und zur Abtrennung von Feinanteilen einmal sedimentiert. Danach wird der pH-Wert mit Salzsäure auf 1,8 gestellt und es werden 100 ml einer salzsauren $SnCl_4$-Lösung (2,2 Gew.-% $SnCl_4$) unter Rühren bei 75°C langsam zudosiert. Anschließend wird eine $TiCl_4$-Lösung (13 Gew.-% $TiCl_4$, berechnet als $TiO_2$) zudosiert, bis das Pigment eine goldgelbe Interferenzfarbe zeigt. Dabei wird der pH-Wert durch Zugabe von Natronlauge bei pH 1,8 gehalten. Anschließend wird 1 Stunde nachgerührt und die Suspension auf pH 5 eingestellt.

Das erhaltene Pigment wird über einen Büchnertrichter abfiltriert, mit Wasser gewaschen, der Filterkuchen bei 140°C getrocknet und das erhaltene Pigmentpulver 30 min bei 750°C geglüht. Man erhält ein lockeres gelbes Pigmentpulver.

**Prüfung der elektrischen Leitfähigkeit:**

Zur Messung des spezifischen Widerstandes der Pigmente wird in einem Acrylglasrohr mit einem Durchmesser von 2 cm eine Menge von jeweils 0,5 g Pigment mit Hilfe eines Gewichtes von 10 kg mit einem Metallstempel gegen eine Metallelektrode zusammengepresst. An den so verpressten Pigmenten wird der elektrische Widerstand R gemessen. Aus der Schichtdicke L des komprimierten Pigmentes ergibt sich der spezifische Widerstand ρ gemäß der Beziehung

$$\rho = R^*\pi^*(d/2)^2/L \; (Ohm^*cm)$$

Mit diesem Verfahren ergeben sich folgende spezifische Widerstände der Pigmente:

Pigment aus Beispiel 1:  ρ = 65 Ωcm
Pigment aus Beispiel 2  ρ > 100 KΩcm

**Prüfung der Mikrowellenabsorption an Lackfilmen:**

Es werden jeweils die Pigmente aus den Beispielen 1 und 2 sowie eine Vergleichsprobe von Iriodin® 205 Rutil Brilliantgelb (Interferenzpigment ohne leitfähige Schicht, Merck KGaA), in NC-Lack (6% Collodium und 6% Butylacrylat-Vinylisobutylether-Copolymer in einem Lösemittelgemisch) dispergiert. Mit der Lackzubereitung werden PET-Folien beschichtet. Als weiteres Vergleichsbeispiel wird eine Folie wird mit Lack ohne Pigmentzusatz beschichtet. Die Konzentration der Pigmente in der trockenen Lackschicht beträgt 20 Gew.-%, die Schichtdicke jeweils 50 μm.

Die Lackfolie, die das Pigment gemäß Beispiel 1 enthält, ist grauweiß und transparent. Die Lackfolie, die das erfindungsgemäße Pigment aus Beispiel 2 enthält, zeigt in der Aufsicht eine intensiv goldene Interferenzfarbe, ebenso wie die Folie, die das Vergleichspigment Iriodin® 205 Rutil Brilliantgelb enthält. Die Vergleichsfolie ohne Pigmentzusatz ist farblos und transparent.

Die Proben werden mit einem Agilent Frequenzanalysator, Modell E5072C, an den ein Mikrowellenresonator-Messkopf angeschlossen ist, bei 3,5 Gigahertz vermessen. Der Messkopf verfügt über einen 0,5 mm Spalt, durch den die beschichtete Lackfolie in das elektrische Feld eingeführt werden kann. Gemessen werden die Frequenz, die Intensität und die Halbwertsbreite des Resonanzsignals, jeweils leer und mit eingeführter Probe. Aus Dämpfung und Frequenzverschiebung des Mikrowellensignals werden Verlustleitung und Polarisierbarkeit der Proben ermittelt. Während das Mikrowellensignal bei den Vergleichsfolien mit NC-Lack ohne Zusatz und mit Iriodin® 205 Rutil Brilliantgelb (ohne leitfähige Schicht) praktisch gar nicht gedämpft wird, beträgt der Verlust bei den Proben, die die Pigmente aus Beispiel 1 und 2 enthalten, jeweils mehr als 20 Dezibel.

Der Versuch zeigt, dass die intrinsische Leitfähigkeit der Pigmente vergleichbar ist mit der Leitfähigkeit des Pigmentes aus Beispiel 1 ohne farbgebende dielektrische Beschichtung, obwohl mit der Methode der Pulverleitfähigkeitsmessung keine Leitfähigkeit festgestellt werden konnte. Der Versuch zeigt darüber hinaus, dass Mikrowellenabsorption eine geeignete Methode zur Detektion der leitfähigen Schicht in dem goldfarbenen Interferenzpigment und somit zur Unterscheidung verschiedener Proben ist. Zusätzlich zeigt der Versuch auch, dass die erfindungsgemäßen Pigmente prinzipiell geeignet sind, hochfrequente elektromagnetische Strahlung zu dämpfen.

**Patentansprüche**

1. Pigmente, umfassend einen plättchenförmigen transparenten oder semitransparenten elektrisch leitfähigen Kern und mindestens eine den Kern umhüllende farbgebende dielektrische Schicht, wobei der elektrisch leitfähige Kern ein transparentes oder semi-transparentes plättchenförmiges Substrat und eine das Substrat umhüllende oder beiderseits des Substrates befindliche Beschichtung aufweist, die Beschichtung ein- oder mehrschichtig ausgebildet ist und mindestens die äußere Schicht der Beschichtung eine elektrisch leitfähige Schicht darstellt, welche ein oder mehrere dotierte Metalloxide umfasst und mindestens eine Schichtdicke von 15 nm aufweist, und wobei das transparente oder semitransparente Substrat ausgewählt ist aus der Gruppe bestehend aus synthetischem oder natürlichem Glimmer, anderen Schichtsilikaten, Glasplättchen, plättchenförmigem $SiO_2$ und plättchenförmigem $Al_2O_3$.

2. Pigmente gemäß Anspruch 1, **dadurch gekennzeichnet, dass** die den Kern umhüllende Schicht eine Schicht aus einem Material mit einer Brechzahl n ≥ 1,8 ist.

3. Pigmente gemäß Anspruch 1, **dadurch gekennzeichnet, dass** die den Kern umhüllende Schicht eine Schicht aus einem Material mit einer Brechzahl n < 1.8 ist.

4. Pigmente gemäß Anspruch 2, **dadurch gekennzeichnet, dass** sich auf der Schicht aus einem Material mit einer Brechzahl n ≥ 1,8 weitere farbgebende Schichten befinden, die die jeweils darunter liegende Schicht umhüllen und alternierend aus einem Material mit einer Brechzahl n < 1.8 und einem Material mit einer Brechzahl n ≥ 1,8 bestehen.

5. Pigmente gemäß Anspruch 3, **dadurch gekennzeichnet, dass** sich auf der Schicht aus einem Material mit einer Brechzahl n < 1.8 weitere farbgebende Schichten befinden, die die jeweils darunter liegende Schicht umhüllen und alternierend aus einem Material mit einer Brechzahl n ≥ 1,8 und einem Material mit einer Brechzahl n < 1.8 bestehen.

6. Pigmente gemäß Anspruch 4 oder 5, **dadurch gekennzeichnet, dass** eine Schicht aus einem Material mit einer Brechzahl n ≥ 1,8 jeweils die äußerste Schicht des Pigmentes bildet.

7. Pigmente gemäß einem oder mehreren der Ansprüche 1 bis 6, **dadurch gekennzeichnet, dass** das Metalloxid der leitfähigen Schicht Zinnoxid, Zinkoxid, Indiumoxid und/oder Titanoxid ist.

8. Pigmente gemäß Anspruch 7, **dadurch gekennzeichnet, dass** die leitfähige Schicht aus Metalloxiden mit Gallium, Aluminium, Indium, Thallium, Germanium, Zinn, Phosphor, Arsen, Antimon, Selen, Tellur, Molybdän, Wolfram und/oder Fluor dotiert ist.

9. Pigmente gemäß einem oder mehreren der Ansprüche 2 und 4 bis 8, **dadurch gekennzeichnet, dass** die Schicht aus einem Material mit einer Brechzahl n ≥ 1,8 aus $TiO_2$, Titanoxidhydrat, Titansuboxiden, $Fe_2O_3$, FeOOH, $SnO_2$, ZnO, $ZrO_2$, $Ce_2O_3$, CoO, $Co_3O_4$, $V_2O_5$, $Cr_2O_3$ und/oder Mischphasen davon besteht.

10. Pigmente gemäß einem oder mehreren der Ansprüche 3 bis 9, **dadurch gekennzeichnet, dass** die Schicht aus einem Material mit einer Brechzahl n < 1,8 aus $SiO_2$. Siliziumoxidhydrat, $Al_2O_3$, Aluminiumoxidhydrat, Mischphasen davon oder aus $MgF_2$ besteht.

11. Pigmente gemäß einem oder mehreren der Ansprüche 1 bis 10, **dadurch gekennzeichnet, dass** sie über eine intrinsische elektrische Leitfähigkeit verfügen.

12. Verfahren zur Herstellung von farbstarken und/oder optisch variablen Pigmenten gemäß einem oder mehreren der Ansprüche 1 bis 11, umfassend die folgenden Schritte:

a) optional Beschichten eines plättchenförmigen transparenten oder semitransparenten Substrates, welches ausgewählt ist aus der Gruppe bestehend aus synthetischem oder natürlichem Glimmer, anderen Schichtsilikaten, Glasplättchen, plättchenförmigem $SiO_2$ und plättchenförmigem $Al_2O_3$, mit einer oder mehreren dielektrischen Schichten,
b) beidseitiges oder umhüllendes Beschichten des Substrates mit einer elektrisch leitfähigen Schicht, die mindestens eine Schichtdicke von 15 nm aufweist und ein oder mehrere dotierte Metalloxide umfasst, wobei ein elektrisch leitfähiger Kern erhalten wird,
c) umhüllendes Beschichten des elektrisch leitfähigen Kerns mit mindestens einer farbgebenden dielektrischen Schicht.

13. Verfahren gemäß Anspruch 12, **dadurch gekennzeichnet, dass** die Beschichtung des plättchenförmigen Substrates in den Schritten a), b), und/oder c) im Sol-Gel-Verfahren, oder nasschemisch aus anorganischen Ausgangsstoffen erfolgt.

14. Verfahren gemäß den Ansprüchen 12 oder 13, **dadurch gekennzeichnet, dass** in Schritt c) ein Schichtsystem aus mehreren übereinander liegenden farbgebenden dielektrischen Schichten aufgebracht wird, die jeweils die darunter liegende Schicht umhüllen und alternierend aus einem Material mit einer Brechzahl n ≥ 1,8 und einem Material mit einer Brechzahl n < 1,8 bestehen, wobei die den leitfähigen Kern umhüllende erste Schicht entweder aus einem Material mit einer Brechzahl n ≥ 1,8 oder aus einem Material mit einer Brechzahl n < 1,8 bestehen kann und die äußerste Schicht des Pigmentes aus einem Material mit einer Brechzahl n ≥ 1,8 besteht.

15. Verfahren gemäß einem oder mehreren der Ansprüche 12 bis 14, **dadurch gekennzeichnet, dass** die den elektrisch leitfähigen Kern umhüllende Schicht aus $TiO_2$ und/oder Titanoxidhydrat besteht.

16. Verfahren gemäß einem oder mehreren der Ansprüche 12 bis 14, **dadurch gekennzeichnet, dass** die den elektrisch leitfähigen Kern umhüllende Schicht aus $SiO_2$ und/oder Siliziumoxidhydrat besteht.

17. Verfahren gemäß einem oder mehreren der Ansprüche 12 bis 16, **dadurch gekennzeichnet, dass** die elektrisch leitfähige Schicht aus einem mit Antimon dotierten Zinnoxid besteht.

18. Verwendung von Pigmenten gemäß einem oder mehreren der Ansprüche 1 bis 11 in Farben, Lacken, Druckfarben, Kunststoffen, in Sicherheitsanwendungen, Folien, Formulierungen, keramischen Materialien, Gläsern, Papier, zur Lasermarkierung, zur Abschirmung oder Dämpfung hochfrequenter elektromagnetischer Strahlung, zur Wärmereflexion, in Trockenpräparaten oder in Pigmentpräparationen.

19. Verwendung gemäß Anspruch 18, **dadurch gekennzeichnet, dass** die Pigmente mit organischen und/oder anorganischen Farbmitteln und/oder elektrisch leitfähigen Materialien im Gemisch eingesetzt werden.

20. Verwendung gemäß Anspruch 19 oder 20, **dadurch gekennzeichnet, dass** die Pigmente in Sicherheitsprodukten eingesetzt werden, die dem Einfluss eines elektromagnetischen Feldes ausgesetzt werden.

21. Pigmentpulver, enthaltend Pigmente gemäß einem oder mehreren der Ansprüche 1 bis 11, **dadurch gekennzeichnet, dass** das Pigmentpulver nicht elektrisch leitfähig ist.

## Claims

1. Pigments comprising a flake-form transparent or semitransparent electrically conductive core and at least one colouring dielectric layer surrounding the core, where the electrically conductive core has a transparent or semitransparent flake-form substrate and a coating surrounding the substrate or located on both sides of the substrate, the coating has a single- or multilayered structure and at least the outer layer of the coating represents an electrically conductive layer which comprises one or more doped metal oxides and has a layer thickness of at least 15 nm, and where the transparent or semitransparent substrate is selected from the group consisting of synthetic or natural mica, other phyllosilicates, glass flakes, flake-form $SiO_2$ and flake-form $Al_2O_3$.

2. Pigments according to Claim 1, **characterised in that** the layer surrounding the core is a layer comprising a material having a refractive index n $\geq$ 1.8.

3. Pigments according to Claim 1, **characterised in that** the layer surrounding the core is a layer comprising a material having a refractive index n < 1.8.

4. Pigments according to Claim 2, **characterised in that** further colouring layers which surround the respective underlying layer and alternately consist of a material having a refractive index n < 1.8 and a material having a refractive index n $\geq$ 1.8 are located on the layer comprising a material having a refractive index n $\geq$ 1.8.

5. Pigments according to Claim 3, **characterised in that** further colouring layers which surround the respective underlying layer and alternately consist of a material having a refractive index n $\geq$ 1.8 and a material having a refractive index n < 1.8 are located on the layer comprising a material having a refractive index n < 1.8.

6. Pigments according to Claim 4 or 5, **characterised in that** a layer comprising a material having a refractive index n $\geq$ 1.8 in each case forms the outermost layer of the pigment.

7. Pigments according to one or more of Claims 1 to 6, **characterised in that** the metal oxide of the conductive layer is tin oxide, zinc oxide, indium oxide and/or titanium oxide.

8. Pigments according to Claim 7, **characterised in that** the conductive layer comprising metal oxides is doped with gallium, aluminium, indium, thallium, germanium, tin, phosphorus, arsenic, antimony, selenium, tellurium, molybdenum, tungsten and/or fluorine.

9. Pigments according to one or more of Claims 2 and 4 to 8, **characterised in that** the layer comprising a material having a refractive index n $\geq$ 1.8 consists of $TiO_2$, titanium oxide hydrate, titanium suboxides, $Fe_2O_3$, FeOOH, $SnO_2$, ZnO, $ZrO_2$, $Ce_2O_3$, CoO, $Co_3O_4$, $V_2O_5$, $Cr_2O_3$ and/or mixed phases thereof.

10. Pigments according to one or more of Claims 3 to 9, **characterised in that** the layer comprising a material having a refractive index n < 1.8 consists of $SiO_2$, silicon oxide hydrate, $Al_2O_3$, aluminium oxide hydrate, mixed phases thereof or $MgF_2$.

11. Pigments according to one or more of Claims 1 to 10, **characterised in that** they have intrinsic electrical conductivity.

**12.** Process for the preparation of intensely coloured and/or optically variable pigments according to one or more of Claims 1 to 11, comprising the following steps:

a) optionally coating of a flake-form transparent or semitransparent substrate which is selected from the group consisting of synthetic or natural mica, other phyllosilicates, glass flakes, flake-form $SiO_2$ and flake-form $Al_2O_3$ with one or more dielectric layers,

b) coating of the substrate on both or all sides with an electrically conductive layer which has at least a layer thickness of 15 nm and comprises one or more doped metal oxides, giving an electrically conductive core,

c) coating of the electrically conductive core on all sides with at least one colouring dielectric layer.

**13.** Process according to Claim 12, **characterised in that** the coating of the flake-form substrate in steps a), b), and/or c) is carried out by the sol-gel process or by wet-chemical methods from inorganic starting materials.

**14.** Process according to Claims 12 or 13, **characterised in that**, in step c), a layer system comprising a plurality of colouring dielectric layers lying one above the other, each of which surrounds the underlying layer and which alternately consist of a material having a refractive index $n \geq 1.8$ and a material having a refractive index $n < 1.8$, is applied, where the first layer surrounding the conductive core may either consist of a material having a refractive index $n \geq 1.8$ or of a material having a refractive index $n < 1.8$, and the outermost layer of the pigment consists of a material having a refractive index $n \geq 1.8$.

**15.** Process according to one or more of Claims 12 to 14, **characterised in that** the layer surrounding the electrically conductive core consists of $TiO_2$ and/or titanium oxide hydrate.

**16.** Process according to one or more of Claims 12 to 14, **characterised in that** the layer surrounding the electrically conductive core consists of $SiO_2$ and/or silicon oxide hydrate.

**17.** Process according to one or more of Claims 12 to 16, **characterised in that** the electrically conductive layer consists of an antimony-doped tin oxide.

**18.** Use of pigments according to one or more of Claims 1 to 11 in paints, coatings, printing inks, plastics, in security applications, films, formulations, ceramic materials, glasses, paper, for laser marking, for screening or attenuation of high-frequency electromagnetic radiation, for heat reflection, in dry preparations or in pigment preparations.

**19.** Use according to Claim 18, **characterised in that** the pigments are employed as a mixture with organic and/or inorganic colorants and/or electrically conductive materials.

**20.** Use according to Claim 19 or 20, **characterised in that** the pigments are employed in security products which are exposed to the influence of an electromagnetic field.

**21.** Pigment powder comprising pigments according to one or more of Claims 1 to 11, **characterised in that** the pigment powder is not electrically conductive.

**Revendications**

**1.** Pigments comprenant un coeur électriquement conducteur transparent ou semi-transparent en forme de paillettes et au moins une couche diélectrique colorante entourant le coeur, où le coeur électriquement conducteur possède un substrat transparent ou semi-transparent en forme de paillettes et un revêtement entourant le substrat ou situé sur les deux côtés du substrat, le revêtement possède une structure à couche unique ou couches multiples et au moins la couche externe du revêtement représente une couche électriquement conductrice qui comprend un ou plusieurs oxydes de métaux dopés et possède au moins une épaisseur de couche de 15 nm, et où le substrat transparent ou semi-transparent est choisi dans le groupe constitué par le mica synthétique ou naturel, d'autres phyllosilicates, des paillettes de verre, du $SiO_2$ en forme de paillettes et du $Al_2O_3$ en forme de paillettes.

**2.** Pigments selon la revendication 1, **caractérisés en ce que** la couche entourant le coeur est une couche comprenant un matériau ayant un indice de réfraction $n \geq 1,8$.

**3.** Pigments selon la revendication 1, **caractérisés en ce que** la couche entourant le coeur est une couche comprenant un matériau ayant un indice de réfraction $n < 1,8$.

**4.** Pigments selon la revendication 2, **caractérisés en ce que** d'autres couches colorantes qui entourent la couche sous-jacente respective et sont constituées alternativement d'un matériau ayant un indice de réfraction $n < 1,8$ et d'un matériau ayant un indice de réfraction $n \geq 1,8$ sont situées sur la couche comprenant un matériau ayant un indice de réfraction $n \geq 1,8$.

**5.** Pigments selon la revendication 3, **caractérisés en ce que** d'autres couches colorantes qui entourent la couche sous-jacente respective et sont constituées alternativement d'un matériau ayant un indice de réfraction n ≥ 1,8 et d'un matériau ayant un indice de réfraction n < 1,8 sont situées sur la couche comprenant un matériau ayant un indice de réfraction n < 1,8.

**6.** Pigments selon la revendication 4 ou 5, **caractérisés en ce qu'**une couche comprenant un matériau ayant un indice de réfraction n ≥ 1,8 dans chaque cas forme la couche la plus externe du pigment.

**7.** Pigments selon l'une ou plusieurs parmi les revendications 1 à 6, **caractérisés en ce que** l'oxyde de métal de la couche conductrice est un oxyde d'étain, un oxyde de zinc, un oxyde d'indium et/ou un oxyde de titane.

**8.** Pigments selon la revendication 7, **caractérisés en ce que** la couche conductrice comprenant des oxydes métalliques est dopée par du gallium, de l'aluminium, de l'indium, du thallium, du germanium, de l'étain, du phosphore, de l'arsenic, de l'antimoine, du sélénium, du tellure, du molybdène, du tungstène et/ou du fluor.

**9.** Pigments selon l'une ou plusieurs parmi les revendications 2 et 4 à 8, **caractérisés en ce que** la couche comprenant un matériau ayant un indice de réfraction n ≥ 1,8 est constituée de $TiO_2$, d'oxyde de titane hydraté, de suboxydes de titane, de $Fe_2O_3$, FeOOH, $SnO_2$, ZnO, $ZrO_2$, $Ce_2O_3$, CoO, $Co_3O_4$, $V_2O_5$, $Cr_2O_3$ et/ou de phases mixtes de ceux-ci.

**10.** Pigments selon l'une ou plusieurs parmi les revendications 3 à 9, **caractérisés en ce que** la couche comprenant un matériau ayant un indice de réfraction n < 1,8 est constituée de $SiO_2$, d'oxyde de silicium hydraté, d'$Al_2O_3$, d'oxyde d'aluminium hydraté, de phases mixtes de ceux-ci ou de $MgF_2$.

**11.** Pigments selon l'une ou plusieurs parmi les revendications 1 à 10, **caractérisés en ce qu'**ils possèdent une conductivité électrique intrinsèque.

**12.** Procédé de préparation de pigments intensément colorés et/ou optiquement variables selon l'une ou plusieurs parmi les revendications 1 à 11, comprenant les étapes suivantes :

a) le revêtement facultatif d'un substrat transparent ou semi-transparent en forme de paillettes qui est choisi dans le groupe constitué par le mica synthétique ou naturel, d'autres phyllosilicates, les paillettes de verre, du $SiO_2$ en forme de paillettes et du $Al_2O_3$ en forme de paillettes par une ou plusieurs couches diélectriques,
b) le revêtement du substrat sur les deux côtés, ou tous, par une couche électriquement conductrice qui possède au moins une épaisseur de couche de 15 nm et comprend un ou plusieurs oxydes de métaux dopés, donnant un coeur électriquement conducteur,
c) le revêtement du coeur électriquement conducteur sur tous les côtés par au moins une couche diélectrique colorante.

**13.** Procédé selon la revendication 12, **caractérisé en ce que** le revêtement du substrat en forme de paillettes dans les étapes a), b), et/ou c) est effectué par le procédé sol-gel ou par des méthodes chimiques par voie humide à partir de produits de départ inorganiques.

**14.** Procédé selon les revendications 12 ou 13, **caractérisé en ce que**, dans l'étape c), un système de couches comprenant une pluralité de couches diélectriques colorantes reposant l'une sur l'autre, chacune d'entre elles entourant la couche sous-jacente et qui sont constituées alternativement d'un matériau ayant un indice de réfraction n ≥ 1,8 et d'un matériau ayant un indice de réfraction n < 1,8, est appliqué, où la première couche entourant le coeur conducteur peut être constituée d'un matériau ayant un indice de réfraction n ≥ 1,8 ou bien d'un matériau ayant un indice de réfraction n < 1,8, et la couche la plus externe du pigment est constituée d'un matériau ayant un indice de réfraction n ≥ 1,8.

**15.** Procédé selon l'une ou plusieurs parmi les revendications 12 à 14, **caractérisé en ce que** la couche entourant le coeur électriquement conducteur est constituée de $TiO_2$ et/ou d'oxyde de titane hydraté.

**16.** Procédé selon l'une ou plusieurs parmi les revendications 12 à 14, **caractérisé en ce que** la couche entourant le coeur électriquement conducteur est constituée de $SiO_2$ et/ou d'oxyde de silicium hydraté.

**17.** Procédé selon l'une ou plusieurs parmi les revendications 12 à 16, **caractérisé en ce que** la couche électriquement conductrice est constituée d'un oxyde d'étain dopé à l'antimoine.

**18.** Utilisation de pigments selon l'une ou plusieurs parmi les revendications 1 à 11 dans les peintures, les revêtements, les encres d'impression, les matières plastiques, dans les applications de sécurité, les films, les formulations, les matériaux céramiques, les verres, le papier, pour le marquage au laser, pour le criblage ou l'atténuation de rayonnement électromagnétique haute fréquence, pour la réflexion thermique, dans des préparations sèches ou dans des préparations de pigment.

**19.** Utilisation selon la revendication 18, **caractérisée en ce que** les pigments sont employés sous forme de mélange avec des colorants organiques et/ou inorganiques et/ou des matériaux électriquement conducteurs.

**20.** Utilisation selon la revendication 19 ou 20, **caractérisée en ce que** les pigments sont employés dans des produits de sécurité qui sont exposés à l'influence d'un champ électromagnétique.

**21.** Poudre de pigments comprenant des pigments selon l'une ou plusieurs parmi les revendications 1 à 11, **caractérisée en ce que** la poudre de pigments n'est pas électriquement conductrice.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3842330
- DE 4237990
- EP 0139557 A
- EP 0359569 A
- EP 0743654 A
- US 20070015012 A1
- EP 1375601 A1
- DE 1467468
- DE 1959998
- DE 2009566
- DE 2214545
- DE 2215191
- DE 2244298
- DE 2313331
- DE 2522572
- DE 3137808
- DE 3137809
- DE 3151355
- DE 3211602
- DE 3235017


**In der Beschreibung aufgeführte Nicht-Patentliteratur**

- Statistics for Experimenters, Whiley-Interscience. John Whiley and Sons, 1978
- **R. GLAUSCH ; M. KIESER ; R. MAISCH ; G. PFAFF ; J. WEITZEL.** Perlglanzpigmente. Curt Vincentz Verlag, 1996, 83 ff